# EUROPEAN PATENT APPLICATION

(11) **EP 2 078 561 A1**
(43) Date of publication of application: **15.07.2009**
(21) Application number: 07830470.6
(22) Date of filing: 24.10.2007
(51) Int. Cl.: B01J 23/63, B01D 53/94, F01N 3/10

(54) **EXHAUST GAS PURIFICATION CATALYST, EXHAUST GAS PURIFICATION SYSTEM, AND EXHAUST GAS PURIFICATION METHOD**

(30) Priority: 02.11.2006 JP 2006299639
(71) Applicant: Isuzu Motors Limited, Tokyo 140-8722 (JP)
(72) Inventor: OOSUMI, Kazuo, Fujisawa-shi Kanagawa 252-8501 (JP)
(74) Representative: WSL Patentanwälte
(86) International application number: PCT/JP2007/070736
(87) International publication number: WO 2008/053761

(57) **Abstract**

An exhaust gas purification catalyst (1) for purifying exhaust gas has a structure in which a mixture of an oxide (31) having oxygen storage capacity and an oxide semiconductor (33) is supported. The oxide (31) having oxygen storage capacity is formed of an oxide containing cerium (Ce), and the oxide semiconductor (33) is formed of any one of or a combination of titanium dioxide (TiO₂), zinc oxide (ZnO), and yttrium oxide (Y₂O₃). In addition, a noble metal (32) is supported on the oxide (31) having oxygen storage capacity, or a noble metal (34) is supported on the oxide semiconductor (33). Accordingly, provided are an exhaust gas purification catalyst, an exhaust gas purification system, and an exhaust gas purification method with a high activity even in low-temperature exhaust gas at a time when an internal-combustion engine starts up or is under a low load condition.

## Description

### TECHNICAL FIELD

The present invention relates to an exhaust gas purification catalyst, an exhaust gas purification system, and an exhaust gas purification method which are used for purifying exhaust gas from an internal-combustion engine or the like with a low-temperature activity.

### BACKGROUND ART

Various researches and proposals have been made on exhaust gas purification devices for purifying exhaust gas from internal-combustion engines such as diesel engines and gasoline engines. Among these devices, there has been used an exhaust gas purification device in which a DPF (diesel particulate filter), or a NOx (nitrogen oxides) purification catalyst for purifying NOx is disposed. As the NOx purification catalyst, a three-way catalyst, an NOx occlusion reduction type catalyst, an SCR catalyst (selective catalytic reduction catalyst) added with urea, an NOx direct reduction catalyst, or the like has been used.

In an exhaust gas purification device for a diesel engine, an oxidation catalyst is provided on the upstream side of the DPF or the NOx purification catalyst to conduct the following operations. When the temperature of exhaust gas is low, reducing agents such as HCs are supplied to the exhaust gas by post-injection or exhaust-pipe injection, and thus the reducing agents are oxidized with the oxidation catalyst. This oxidation increases the temperatures of the oxidation catalyst and exhaust gas on the downstream side of the oxidation catalyst. As a result, the oxidation catalyst is kept at an activation temperature or more, PM combustion of DPF on the downstream side is promoted, and the NOx purification catalyst on the downstream side is kept at an activation temperature or more.

Meanwhile, in an exhaust gas purification device in which an oxidation catalyst is provided on the upstream side of an SCR catalyst, the oxidation catalyst promotes reaction of NO (nitrogen monoxide) to NO₂ (nitrogen dioxide), and thereby reaction with NH₃ (ammonia) on the SCR catalyst is promoted.

This oxidation catalyst exhibits an operation effect to oxidize CO (carbon monoxide), HCs (hydrocarbons) and NO and other effects, in addition to an effect to increase the temperature of the exhaust gas. The oxidation catalyst also has roles of promoting combustion of PM (particulate matters) with NO₂ in a DPF on the downstream side and of securing a performance of the NOx purification catalyst.

A catalyst mainly used as this oxidation catalyst is made of a metal oxide supporting a noble metal, and has an appropriate structure, component and support amount that are selected and determined in every application. Such an oxidation catalyst, however, has a problem of low catalytic activity in a case where the temperature of exhaust gas is low when an internal-combustion engine starts up, or is under a low load condition or an equivalent condition.

For this reason, in order to improve the performance of the oxidation catalyst and thereby to make the oxidation catalyst function as an oxidation catalyst with a high low-temperature activity, a co-catalyst that allows HCs and CO to adsorb thereon is used, or a material having oxygen storage capacity (OSC) is added as a co-catalyst.

Meanwhile, exhaust gas purification devices and methods for raising temperature of the gas purification devices by use of a self-heat generation effect of an oxygen storage material upon storage of oxygen are proposed as described in Japanese Patent Application Kokai Publication No. 2006-207524 and Japanese Patent Application Kokai Publication No. 2006-207549 for example. The oxygen storage material releases oxygen when an air-fuel ratio state of exhaust gas is a rich state. While in a lean state, the oxygen storage material stores oxygen and generates heat by itself. A material containing Ce (cerium) element is used as the oxygen storage material.

In addition, it is known, from analysis of experiments on catalyst and performance evaluation thereof conducted so far, that active oxygen released from the oxygen storage capacity material greatly contributes to the low-temperature activity for HCs and CO also in exhaust gas from a diesel engine that is high in oxygen concentration. It is also known that it is effective to lower the temperature at which active oxygen is released as a measure to increase the low-temperature activity of a catalyst having an oxygen storage capacity material.

At present, however, there is no practically-used catalyst that shows an enough catalytic activity even in a case where the temperature of exhaust gas is low when an internal-combustion engine starts up or is under a low load condition or an equivalent condition. Accordingly, an exhaust gas purification catalyst with a low-temperature activity has been demanded.
Patent Document 1: Japanese Patent Application Kokai Publication No. 2006-207524
Patent Document 2: Japanese Patent Application Kokai Publication No. 2006-207549

### DISCLOSURE OF THE INVENTION

### PROBLEM TO BE SOLVED BY THE INVENTION

The present invention has been made to solve the above problem. An object of the present invention is to provide an exhaust gas purification catalyst, an exhaust gas purification system, and an exhaust gas purification method with a high activity even in low-temperature exhaust gas at a time when an internal-combustion engine starts up or is under a low load condition.

### MEANS FOR SOLVING THE PROBLEM

An exhaust gas purification catalyst to achieve the above object is an exhaust gas purification catalyst for purifying exhaust gas and has a configuration in which a mixture of an oxide having oxygen storage capacity and an oxide semiconductor are supported. In addition, in the above exhaust gas purification catalyst, the oxide having oxygen storage capacity is formed of an oxide containing cerium (Ce), and the oxide semiconductor is formed of any one of or a combination of titanium dioxide (TiO₂), zinc oxide (ZnO), and yttrium oxide (Y₂O₃). In addition, a noble metal is supported on the oxide having oxygen storage capacity, or a noble metal is supported on the oxide semiconductor.

To be more specific, a combination of a material having oxygen storage capacity such as CeO₂ and an oxide semiconductor such as TiO₂ provides a catalyst that shows oxygen storage capacity characteristics from a low temperature to thus function as an oxidation catalyst having a high low-temperature activity. Presumably because of the following reasons, the catalyst in which the oxide having oxygen storage capacity and the oxide semiconductor are mixed shows oxygen storage capacity from a low temperature. That is, the coexistence of the oxygen storage capacity material and the oxide semiconductor causes a parallel displacement of electron energy and thus an unstable state is produced, i.e., a band offset effect is caused. The present invention takes an advantage of the band offset effect to provide an exhaust gas purification catalyst having a low-temperature activity.

In addition, oxidation reaction on a surface of the oxide semiconductor can be adjusted by supporting a noble metal such as platinum (Pt), gold (Au), silver (Ag), rhodium (Rh), or iridium (Ir) on the oxide having oxygen storage capacity, or supporting or a similar noble metal on the oxide semiconductor. The support amount of the noble metal is adjusted according to the composition of exhaust gas, since such exhaust gas contains various HCs and water.

When a noble metal is supported on the oxide having oxygen storage capacity, CO and HCs adsorb on the noble metal, which is highly active. In the meantime, oxygen in the material having oxygen storage capacity such as CeO₂ is released to oxidize CO and HCs. In other words, the noble metal assists the release of oxygen. On the other hand, when a noble metal is supported on the oxide semiconductor, CO and HCs adsorb on the noble metal, and the CO and HCs are oxidized thereon.

An exhaust gas purification system to achieve the above object is configured such that the above-described exhaust gas purification catalyst is used in an exhaust gas purification system for purifying exhaust gas from an internal-combustion engine mounted in an automobile. Meanwhile, an exhaust gas purification method to achieve the above object is **characterized in that** the above-described exhaust gas purification catalyst is used in an exhaust gas purification method for purifying exhaust gas from an internal-combustion engine mounted in an automobile.

### EFFECTS OF THE INVENTION

In the exhaust gas purification catalyst, exhaust gas purification system, and exhaust gas purification method according to the present invention, the oxygen storage capacity material and the oxide semiconductor coexist. Accordingly, a parallel displacement of electron energy occurs and thus an unstable state is produced, i.e., a band offset effect is caused. For this reason, by taking an advantage of the band offset effect, the low-temperature activity of the catalyst can be enhanced. As a result, even in low-temperature exhaust gas at a time when an internal-combustion engine starts up or is under a low load condition, the activity of the catalyst can be kept high and thus the exhaust gas can be efficiently purified. In addition, since the phenomena of the low-temperature activity is based on the band offset effect, the amount of the noble metal supported on the exhaust gas purification catalyst can be reduced as compared with those of exhaust gas purification catalysts according to conventional techniques.

### BRIEF DESCRIPTION OF THE DRAWINGS

[Fig. 1] Fig. 1 is a view showing a structure of an exhaust gas purification catalyst of an embodiment according to the present invention.
[Fig. 2] Fig. 2 is a view showing a lattice structure and a lattice constant of cerium dioxide.
[Fig. 3] Fig. 3 is a diagram showing relationships between shift in lattice constant and temperature in Example 1 and Comparative Example 1.
[Fig. 4] Fig. 4 is a diagram showing relationships between shift in lattice constant and temperature in Examples 2 and 3, and Comparative Example 2.
[Fig. 5] Fig. 5 is a diagram showing relationships between temperature and differential heat (DTA) and between thermogravity (TG) and temperature in Example 3.
[Fig. 6] Fig. 6 is a diagram showing relationships between temperature and differential heat (DTA) and between thermogravity (TG) and temperature in Comparative Example 2.
[Fig. 7] Fig. 7 is a diagram showing temperatures at which oxygen storage capacity (OSC) characteristics start to appear in Examples and Comparative Examples.
[Fig. 8] Fig. 8 is a diagram showing light-off temperatures for HCs and CO in Examples and Comparative Examples.

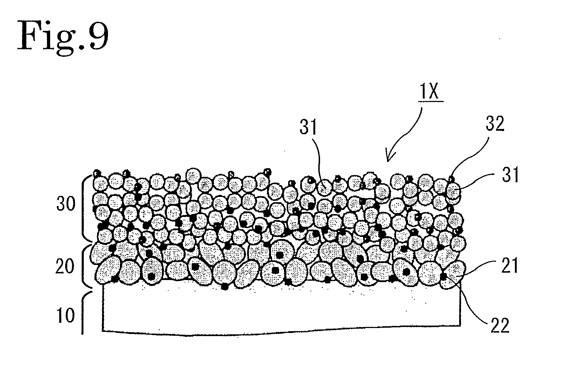

[Fig. 9] Fig. 9 is a view showing a structure of an exhaust gas purification catalyst of Comparative Examples.

### EXPLANATION OF REFERENCE SYMBOLS

- 1, 1x: Exhaust gas purification catalyst
- 10: Cordierite honeycomb
- 20: Lower layer (catalyst-coat layer)
- 21: Aluminum oxide
- 22: Noble metal
- 30: Upper layer
- 31: Oxygen storage capacity material
- 32: Noble metal
- 33: Oxide semiconductor
- 34: Noble metal
- a: lattice constant
- Δa: shift in lattice constant

### BEST MODES FOR CARRYING OUT THE INVENTION

Hereinafter, an exhaust gas purification catalyst and an exhaust gas purification system of embodiments according to the present invention will be described with reference to the drawings.

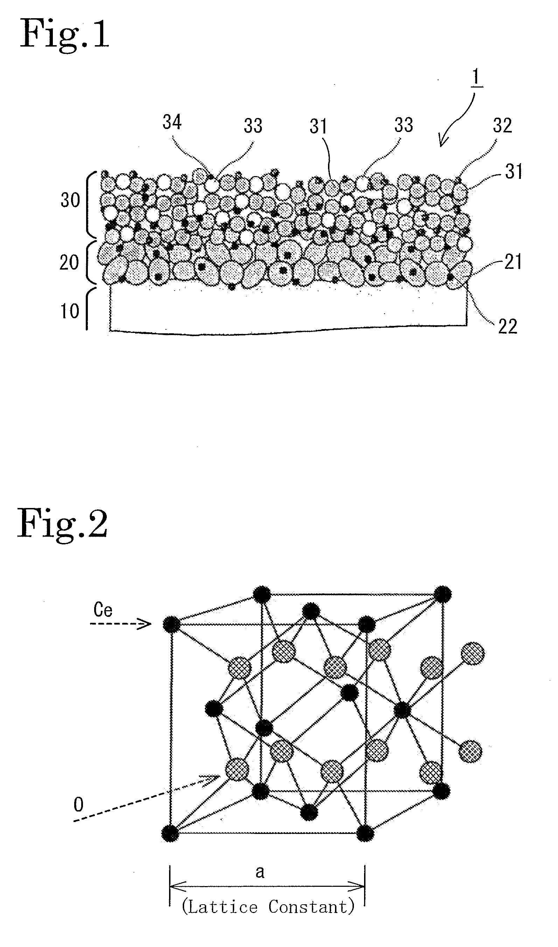

As shown in Fig. 1, an exhaust gas purification catalyst 1 of the embodiment according to the present invention is formed of a monolithic honeycomb 10 made of a structural material such as cordierite, silicon carbide (SiC) or stainless, and having multiple polygonal cells. The honeycomb 10 forms an inner wall of each cell and serves as a supporting member. On the honeycomb 10, a catalyst-coat layer, i.e., a lower layer 20, made of Al₂O₃ (aluminum oxide), Al₂O₃ with zeolite, or the like, is provided. The lower layer 20 has functions to enlarge a surface area and to hold other catalyst components. Note that, in the lower layer 20, a noble metal 21 such as platinum (Pt) may be supported.

An upper layer 30 is provided on the lower layer 20. In the upper layer 30, an oxygen storage capacity material 31, which is an oxide having oxygen storage capacity, and an oxide semiconductor 33 are present as a mixture. As a result, the exhaust gas purification catalyst 1 supports the oxide 31 having oxygen storage capacity and the oxide semiconductor 33 which are present as a mixture.

This oxygen storage capacity material 31 is formed of an oxide containing cerium (Ce). Examples of such an oxide include an oxide such as cerium dioxide (CeO₂), a composite oxide such as zirconium oxide (ZrO₂)-cerium dioxide (CeO₂), and the like. Meanwhile, the oxide semiconductor 33 is formed of any one of or a combination of titanium dioxide (TiO₂), zinc oxide (ZnO), and yttrium oxide (Y₂O₃).

Oxidation reaction on the surface of the oxygen storage capacity material 31 or the oxide semiconductor 33 is adjusted by further supporting a noble metal 32 or a combination of noble metals 32, such as platinum (Pt), gold (Au), silver (Ag), rhodium (Rh), and iridium (Ir) on the oxygen storage capacity material 31, or by further supporting a noble metal 34 or noble metals 34 on the oxide semiconductor 33, the noble metal 34 being the same as that for the oxygen storage capacity material 31. The support amounts of those noble metals 32 and 33 are adjusted according to the composition of exhaust gas to be purified, since the exhaust gas includes various HCs and water.

In the exhaust gas purification catalyst 1 with the above-described structure, the oxygen storage capacity material 31 and the oxide semiconductor 33 coexist. Accordingly, a parallel displacement of electron energy occurs, and thus an unstable state is produced, i.e., a band offset effect is caused. As a result, the exhaust gas purification catalyst 1 shows a low-temperature activity. Meanwhile, oxidation reaction on the surface of the oxide semiconductor can be adjusted by supporting the noble metal 32 or 34 on at least one of the oxygen storage capacity material 31 and the oxide semiconductor 33. Purification characteristics of the exhaust gas purification catalyst 1 can be matched with the composition of exhaust gas to be purified by adjusting the support amount of the noble metal 32 or 34.

An exhaust gas purification system for purifying exhaust gas from an internal-combustion engine mounted in an automobile can be formed by disposing an exhaust gas purification device using the exhaust gas purification catalyst in an exhaust passage of the internal-combustion engine. Moreover, an exhaust gas purification method for purifying exhaust gas form an internal-combustion engine can also be implemented.

### Examples

Next, description will be made of Examples and Comparative Examples. As Examples of an exhaust gas purification catalyst of the present invention, the following three catalysts each having a structure as shown in Fig. 1 were used. A catalyst used in Example 1 was formed by coating a lower layer 20 of Pt (platinum) -Al₂O₃ (aluminum oxide: alumina) ; and an upper layer 30 of a mixture of Rh (rhodium)-CeO₂ (cerium dioxide: ceria) and Pt-TiO₂ (titanium dioxide: titania); on a cordierite honeycomb 10. In other words, CeO₂ was used as a functional oxide material 31. TiO₂ was used as an oxide semiconductor 33. Rh was used as a noble metal 32 supported on the functional oxide material 31. Pt was used as a noble metal 34 supported on the oxide semiconductor 33.

Meanwhile, a catalyst used in Example 2 was formed by coating a lower layer 20 of Pt-Al₂O₃ and an upper layer 30 of a mixture of Pt-CeO₂ and Pt-TiO₂ on a cordierite honeycomb 10. In other words, the used catalyst had Pt in place of Rh of the noble metal 32 supported on the functional oxide material 31 in Example 1.

Meanwhile, a catalyst used in Example 3 included a lower layer 20 of Pt-Al₂O₃ and an upper layer 30 of a mixture of Pt-CeO₂ and TiO₂ coated on a cordierite honeycomb 10. In other words, the used catalyst had Pt in place of Rh of the noble metal 32 supported on the functional oxide material 31 in Example 3.

On the other hand, as Comparative Examples, two catalysts each having a structure as shown in Fig. 15 were used. A catalyst used in Comparative Example 1 included a lower layer 20 of Pt-Al₂O₃ and an upper layer 30 of Rh-CeO₂ coated on a cordierite honeycomb 10. A catalyst used in Comparative Example 2 included a lower layer 20 of Pt-Al₂O₃ and an upper layer 30 of Pt-CeO₂ coated on a cordierite honeycomb 10.

In other words, the catalyst of Comparative Example 1 was equivalent to the catalyst of Example 1 or 3 except that the oxide semiconductor 33 and the noble metals 34 supported on the oxide semiconductor 33 were excluded. The catalyst of Comparative Example 2 was equivalent to the catalyst of Example 2 except that the oxide semiconductor 33 and the noble metals 34 supported on the oxide semiconductor 33 were excluded.

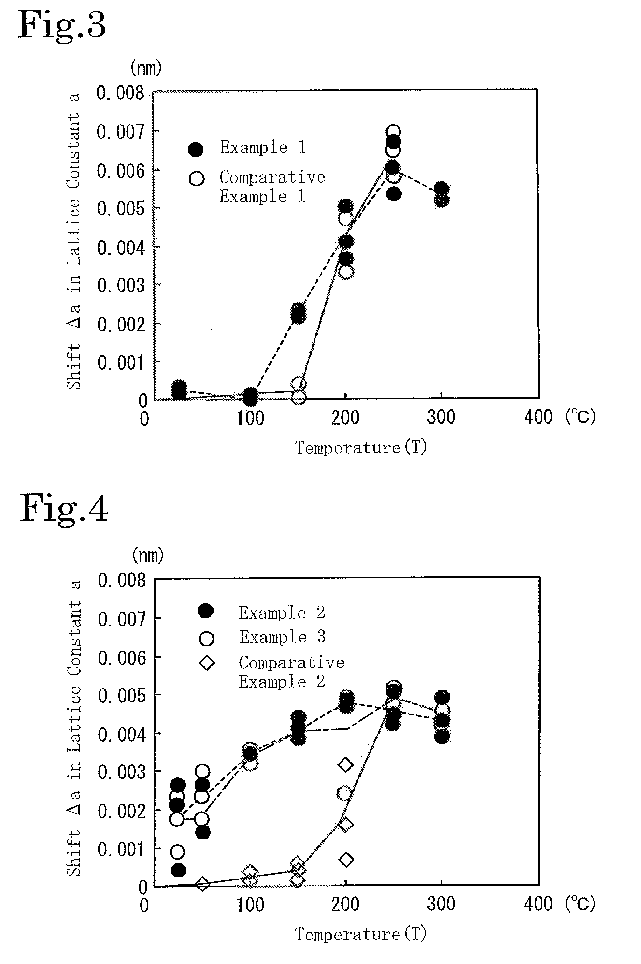

The following measurements were conducted on each of the catalysts of Examples 1 to 3 and Comparative Examples 1 and 2. Each catalyst was crushed, and then lattice constant a of CeO₂ as shown in Fig. 2 was measured by using an X-ray diffractometer (XRD) from room temperature to 300°C, while a mixture gas of 3% H₂-97% N₂ (reducing gas) and 10% O₂-90% N₂ gas (oxidizing gas) were alternately circulated approximately every 15 minutes. Fig. 3 and Fig. 4 show results of those measurements.

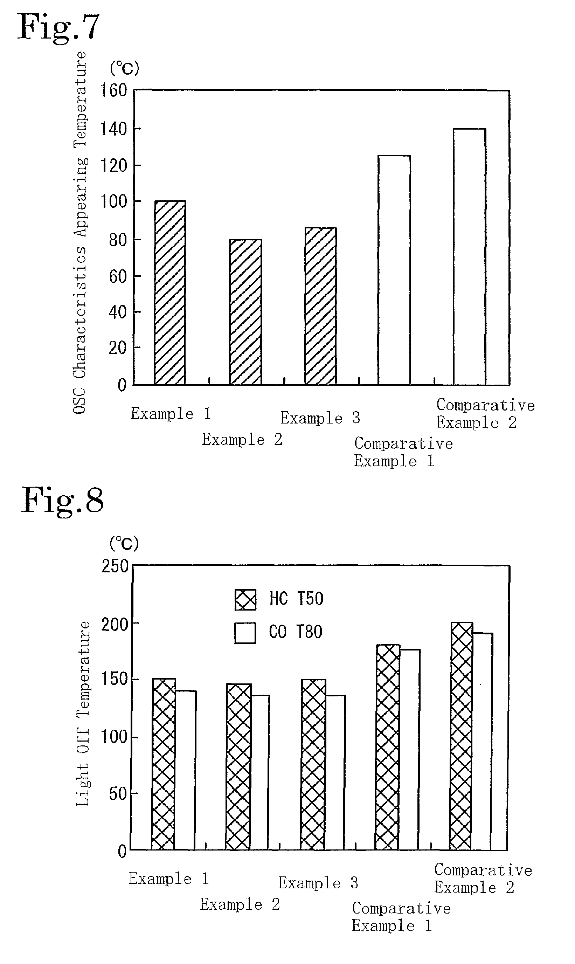

The crystal structure of CeO₂ is a structure of a face centered cubic crystal as shown in Fig. 2. When oxygen deficiency occurs in CeO₂, the lattice constant a thereof becomes large. Fig. 3 and show relationships between an increment Δa (nm: nanometers) in the lattice constant a and temperature T (°C). From Fig. 3 and Fig. 4, it is found out that the temperature at which change in lattice constant a occurred was shifted to a low-temperature side in each catalyst of Example 1 to 3 in which Pt-TiO₂ and TiO₂ were mixed in the upper layer 20. Especially, in Example 2 and Example 3, the change in lattice constant a occurred from room temperature as shown in Fig. 4. This change in lattice constant a has relationship with the oxygen storage capacity (OSC) as shown in Fig. 7, and it is found out that the catalysts of Examples 1 to 3 have low-temperature activities.

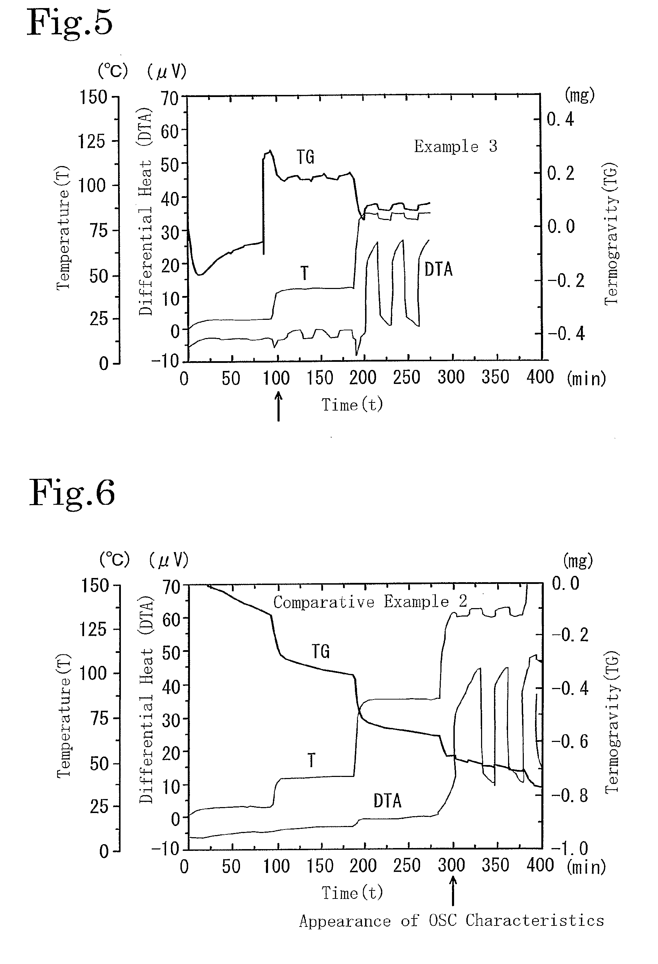

In addition, oxygen storage capacity (OSC) characteristics such as oxidation reaction temperature were measured by use of a thermogravimetry/differential thermal analyzer (TG-DTA) from room temperature to 300°C, while a mixture gas of 3% H₂-97% N₂ (reducing gas) and 10% O₂-90% N₂ gas were alternately circulated approximately every 15 minutes. Fig. 5 to Fig. 7 show these results. The vertical axes of Fig. 5 and Fig. 6 represent temperature (T), thermogravity (TG), and differential heat (TDA), while the horizontal axes represent time (t). The thermogravity (TG) represents change in weight occurring when a sample is heated. The differential heat (TDA) represents a temperature difference occurring when a sample and a reference sample (for example, Al₂O₃) are heated.

The results from Fig. 5 and Fig. 6 indicate that oxygen storage capacity (OSC) in Example 3 started to appear at a lower temperature by 50 to 100°C than that in Comparative Example 2. This supports the results obtained by the measurements by the X-ray diffractometer.

Further, for each of Examples 1 to 3 and Comparative Examples 1 and 2, oxidation performances for HCs (hydrocarbons) and CO (carbon monoxide) were measured. Fig. 8 shows the results thereof. As consistent with the measurement results obtained using the X-ray diffractometer and the thermogravimetry/differential thermal analyzer, light off temperatures of Examples 1 to 3 are lower than those of Comparative Examples 1 and 2 by at least 30°C. Those results reveal that the catalysts of Examples 1 to 3 have low-temperature activities. Results of oxidation performances of Example 2 and Example 3 are especially excellent.

Note that other experiments revealed that the same effect was obtained even when a composite oxide of ZrO₂ (zirconium oxide)-CeO₂ was used as CeO₂ of the upper layer 30. Meanwhile, an oxide semiconductor of other than TiO₂ such as ZnO (zinc oxide) or Y₂O₃ (yttrium oxide) has the same effect. In addition, as for Pt-Al₂O₃ in the lower layer 20, a catalyst using Al₂O₃ without Pt supported thereon, and a catalyst without the lower layer 20 show low-temperature activities. In these catalysts, however, oxidation characteristics for HC are lowered. In addition, it is experimentally found out that in the case where Pt-Al₂O₃ is mixed to the upper layer 30, characteristics according to the mixed proportion thereof are exhibited.

### INDUSTRIAL APPLICABILITY

The above-described exhaust gas purification catalyst, exhaust gas purification system, and exhaust gas purification method according to the present invention with an excellent low-temperature activity can be extremely-effectively used for an internal-combustion engine mounted in an automobile or the like.

## Claims

1. An exhaust gas purification catalyst for purifying exhaust gas, the exhaust gas purification catalyst **characterized in that** a mixture of an oxide having oxygen storage capacity and an oxide semiconductor is supported.

2. The exhaust gas purification catalyst according to claim 1, **characterized in that**
the oxide having oxygen storage capacity is formed of an oxide containing cerium (Ce), and
the oxide semiconductor is formed of any one of or a combination of titanium dioxide (TiO₂), zinc oxide (ZnO), and yttrium oxide (Y₂O₃).

3. The exhaust gas purification catalyst according to any one of claims 1 and 2, **characterized in that** a noble metal is supported on the oxide having oxygen storage capacity.

4. The exhaust gas purification catalyst according to any one of claims 1, 2, and 3, **characterized in that** a noble metal is supported on the oxide semiconductor.

5. An exhaust gas purification system for purifying exhaust gas from an internal-combustion engine mounted in an automobile, the exhaust gas purification system **characterized in that** the exhaust gas purification catalyst according to any one of claims 1, 2, 3, and 4 is used.

6. An exhaust gas purification method for purifying exhaust gas from an internal-combustion engine mounted in an automobile, the exhaust gas purification method **characterized in that** the exhaust gas purification catalyst according to any one of claims 1, 2, 3, and 4 is used.
